# EUROPEAN PATENT SPECIFICATION

(11) **EP 2 009 719 B1**
(45) Date of publication and mention of the grant of the patent: **07.07.2010**
(21) Application number: 07111036.5
(22) Date of filing: 26.06.2007
(51) Int. Cl.: H01M 4/86, H01M 4/88, H01M 8/10

(54) **Method of fabricating a membrane electrode assembly**
Herstellungsverfahren einer Membranelektrodenanordnung
Procédé de fabrication d'un ensemble électrode-membrane

(43) Date of publication of application: 31.12.2008
(73) Proprietor: Atomic Energy Council - Institute of Nuclear Energy Research, Lungtan, Taoyuan, Taiwan (TW)
(72) Inventor: CHANG, Hwei-Lang, Longtan Shiang, Taoyuan 325 (TW); CHANG, Hen-Rong, Pingzhen City, Taoyuan County 324 (TW); SHIEH, Kuo-Lon, Longtan Shiang, Taoyuan County 325 (TW); CHUNG, Pi-Hsin, Zhongli City, Taoyuan County 320 (TW)
(74) Representative: Beck, Michael Rudolf

(56) References cited:
- EP-A- 1 406 328
- WO-A-02/45188
- US-A1- 2006 216 563

## Description

### Field of the invention

The present invention relates to a membrane electrode assembly (MEA); more particularly, relates to forming two flat catalyst electrode layers (CEL) on two surfaces of a proton exchange membrane (PEM) separately and controlling a thickness of CEL on the MEA.

### Description of the Related Art

A prior art of fabricating an MEA of a fuel cell by printing comprises the following steps:
(a) An ion exchange membrane, an anode catalyst solution and a cathode catalyst solution are prepared.
(b) A desired size of the ion exchange membrane is cut out and put upon a base plate of screen printer.
(d) The ink of a catalyst is evenly sreen printed on the ion exchange membrane by using a scraper.
(f) After the ion exchange membrane is laid flat, a catalyst layer is formed on the ion exchange membrane.

Although the prior art forms an anode or cathode catalyst layer on the ion exchange membrane, the ion exchange membrane may easily be wrinkled on touching the anode or cathode catalyst ink. Thus, a catalyst coated PEM layer obtained in this way is wrinkled, not flat. Additional processes for getting rid of the wrinkle are usually required. And, so, processes of printing and wrinkle-removing are repeated for times on coating a thick catalyst layer. Hence, the prior art does not fulfill all users' requests on actual use.

### Summary of the invention

The main purpose of the present invention is to form flat MEA with a CEL thickness controllable.

To achieve the above purpose, the present invention provides methods according to claims 1 and 5. Advantageous embodiments are laid down in dependent claims.

A method for fabricating a membrane electrode assembly, comprises the steps of preparing, inputting a material, forming, changing side, inputting a material again and forming again, where a temperature-controllable suction plate, which is on the inlet of a vacuum device, is used to suck-flat a PEM; a hollow of a template deposed on the PEM is filled with designed amount of the ink (or said slurry) of catalyst material and then keeps the temperature of the suction plate at the binding temperature for the slurry of catalyst material and the PEM; a convex part of a pressing plate is correspondingly pressed into the hollow of the template to form the first CEL on a surface of the PEM; after cooling down of the sucktion plate, the PEM is turned over; the slurry of another catalyst material is poured in and a binding temperature is reached; and the convex part of the pressing plate is correspondingly pressed into the hollow of the template to obtain a second CEL' on another surface of the PEM. Accordingly, a novel method for fabricating a MEA is obtained.

### Brief descriptions of the drawings

The present invention will be better understood from the following detailed description of the preferred embodiment according to the present invention, taken in conjunction with the accompanying drawings, in which
- FIG.1: is the flow view showing the preferred embodiment according to the present invention;
- FIG.2: is the view showing preparing;
- FIG.3: is the view showing inputting the material;
- FIG.4: is the view showing forming;
- FIG.5: is the view showing changing side;
- FIG.6: is the view showing inputting the material again;
- FIG.7: is the view showing forming again; and
- FIG.8: is the view showing the product.

### Description of the preferred embodiment

The following description of the preferred embodiment is provided to understand the features and the structures of the present invention.

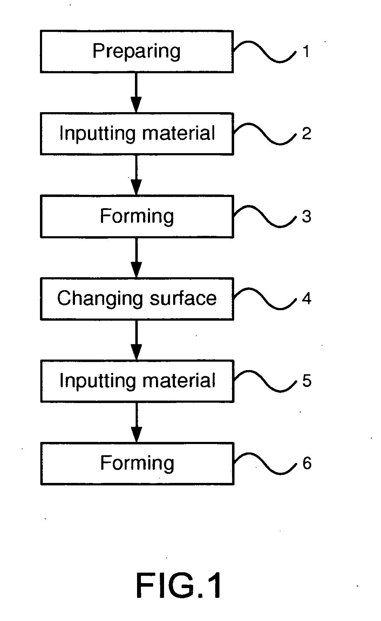

Please refer to FIG.1, which is a flow view showing a preferred embodiment according to the present invention. As shown in the figure, the present invention is a method for fabricating a membrane electrode assembly (MEA), comprising steps of preparing 1, inputting a material 2, forming 3, changing side 4, inputting a material again 5 and forming again 6, where two flat catalyst electrode layers (CEL) are formed on two surfaces of a proton exchange membrane (PEM) separately and a thickness of CEL on the MEA is under control. Thus, a novel method for fabricating a MEA is obtained.

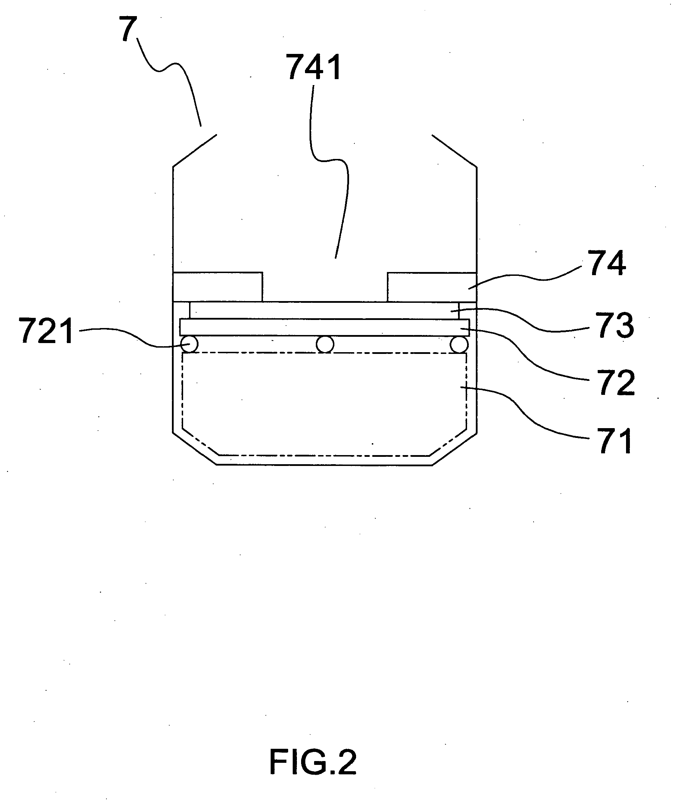

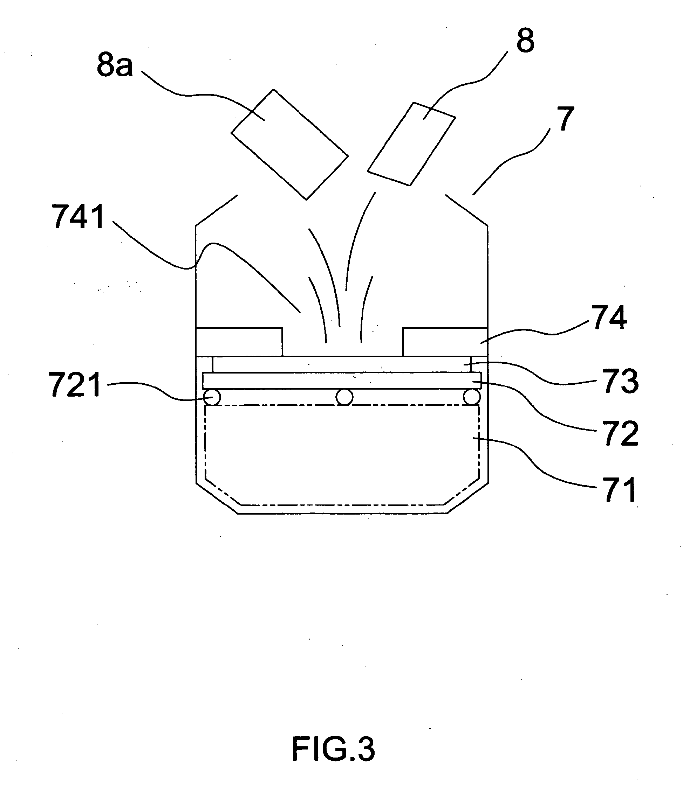

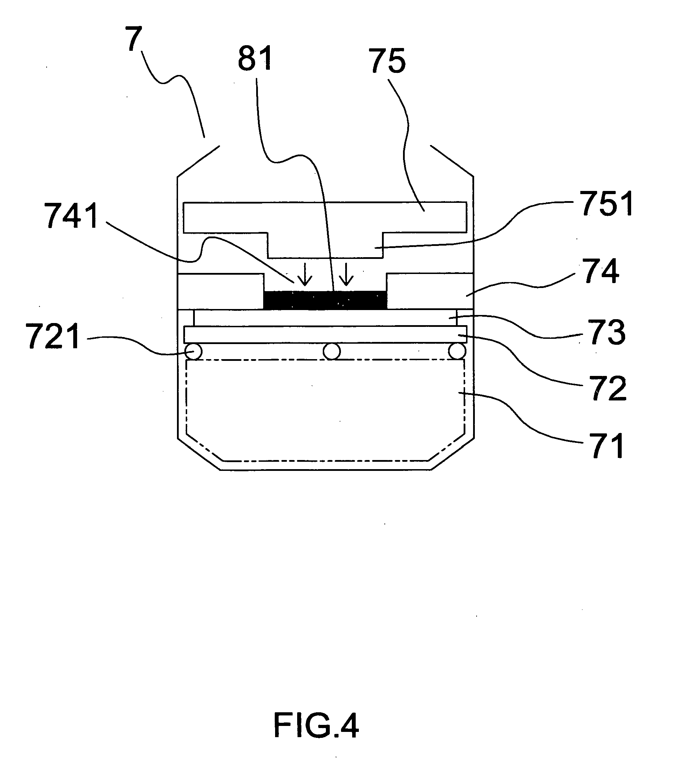

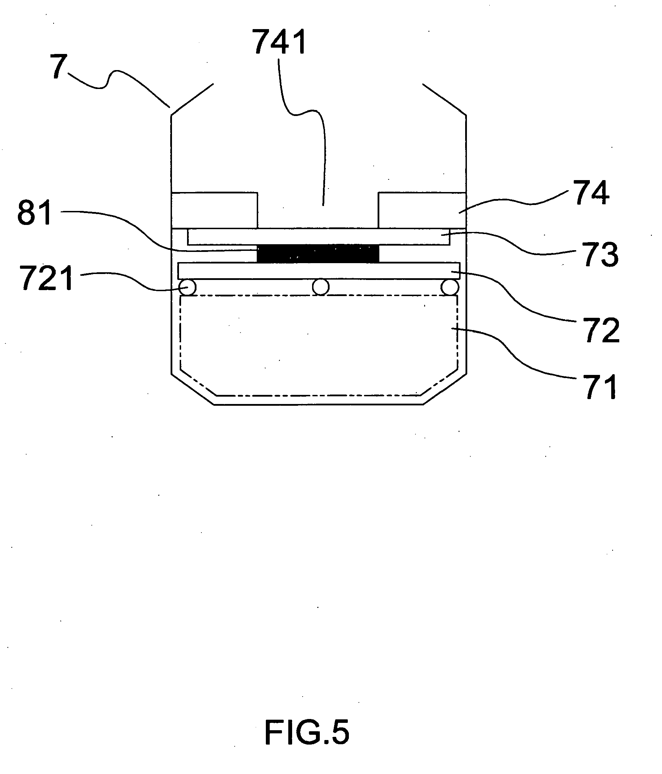

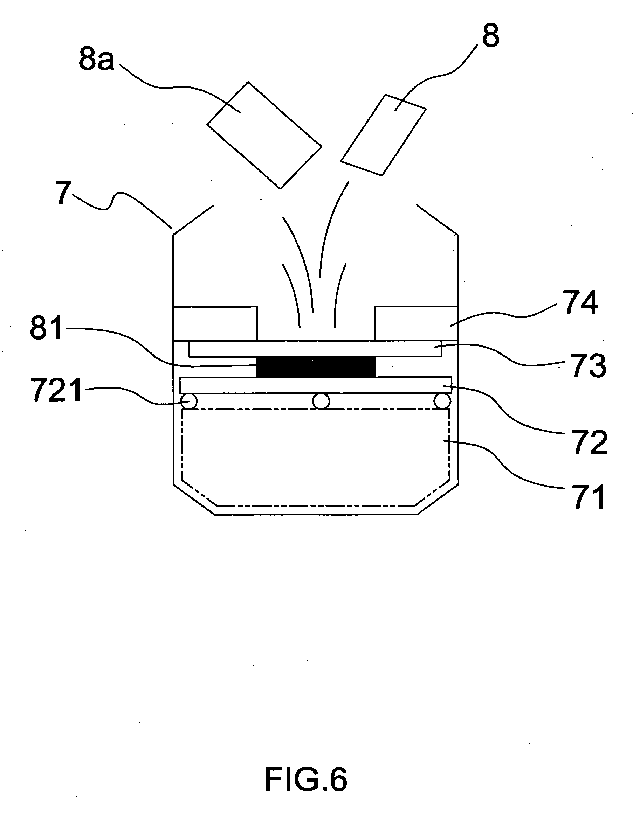

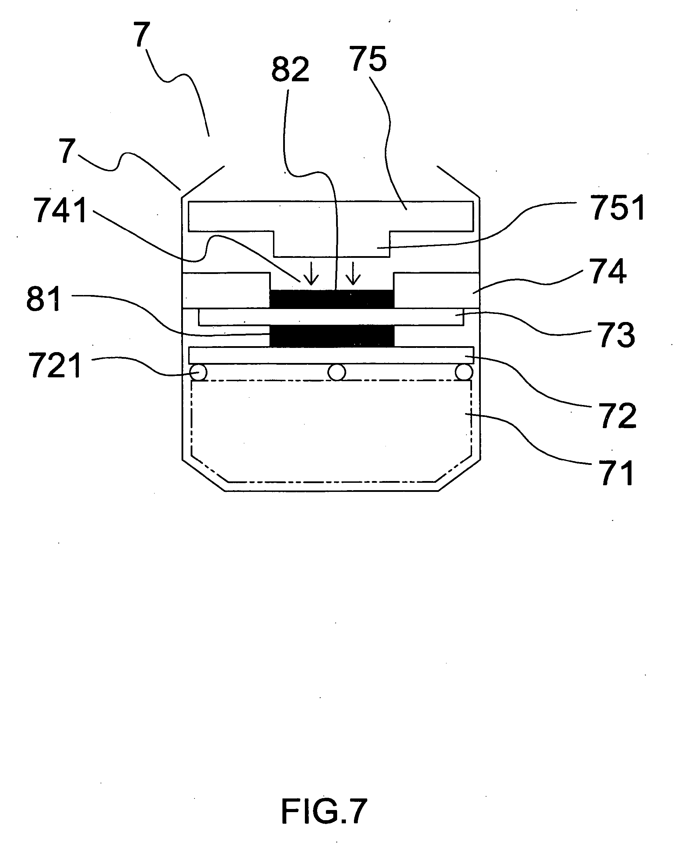

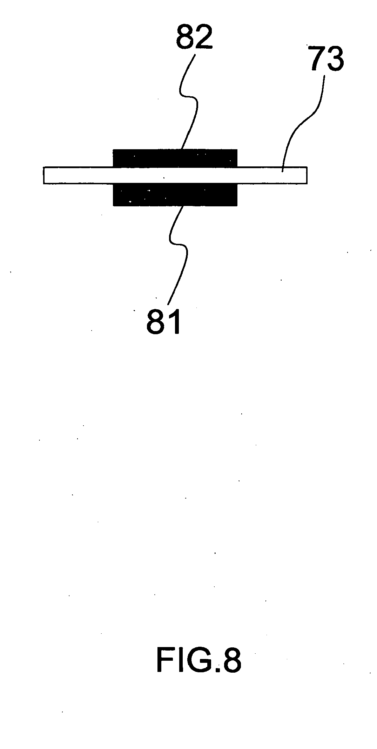

Please further refer to FIG.2 to FIG.8, which are views showing preparing; inputting a material; forming; changing side; inputting the material again; forming again; and a product obtained. As shown in the figures, the present invention comprises the following steps:
(a) Preparing 1: A vacuum facility 71 is obtained, which is not heated up; or is heated up with a temperature controlled. A suction plate 72 which is set on the inlet of the vacuum facility 71, is made of a drilled plate, a framed plate, a plate of screens, or a sintering material or any combination of the above. A PEM 73 is set on the suction plate 72. The PEM 73 is horizontally fixed on the suction plate 72 through a vacuum effect. Then a template 74 with a hollow 741 is set on the PEM 73.
(b) Inputting material 2: A slurry of anode or cathode catalyst material 8,8a is poured into the hollow 741 of the template 74 in the MEA chamber 7. A temperature-controllable heater 721 in the vacuum facility 71 is activated to heat the suction plate, to raise a temperature to bind the slurry of anode or cathode catalyst material 8,8a and the PEM 73. (If the binding is processed in a room temperature, the temperature is not raised.)
(c) Forming 3: The temperature of the MEA chamber 7 is kept at the binding temperature. Then a pressing plate 74 having a convex part 741 is correspondingly pressed into the hollow 741 of the template 74 to obtain a first CEL 81 on a surface of the PEM 73.
(d) Changing side 4: After the first CEL 81 is obtained on the surface of the PEM 73, the MEA chamber 7 is cooled down; the ventilation effect of the vacuum facility 71 is stopped; and the template 74 is taken out and the PEM 73 is turned over. The ventilation effect of the vacuum facility 71 is activated again to fix the PEM 73 on the suction plate 72, and then the template 74 is deposed on another surface of the PEM 73.
(e) Inputting material again 5: A slurry of anode or cathode catalyst material 8,8a is poured into the hollow 741 of the template 74 again. The temperature-controllable heater 721 in the vacuum facility 71 is activated to heat the suction plate, to raise a temperature to bind the slurry of anode or cathode catalyst material 8,8a and the PEM 73. (If the binding is processed in a room temperature, the temperature is not raised.)
(f) Forming again 6: The temperature of the MEA chamber 7 is kept at the binding temperature. Then the pressing plate 74 having the convex part 741 is correspondingly pressed into the hollow 741 of the template 74 to obtain a second CEL (CEL') 82 on a surface of the PEM 73. Thus, a MEA having three layers (MEA-3-layer) of CEL 81+PEM 73+CEL' 82 is obtained.

If gas diffusion layers (GDL and GDL') are added separately before two times of pressing by the pressing plate 74, a MEA having five layers (MEA-5-layer) of GDL+CEL 81+PEM 73+CEL' 82+GDL' is obtained. The GDL is made of a conductive-carbon-contained fabric, a non-woven fabric or a carbon paper.

For defining the first CEL 81 or the second CEL' 82 as an anode or a cathode, a slurry of anode or cathode catalyst material 8,8a is poured in steps of inputting a material 2 and inputting the material again 5. If the first CEL 81 or the second CEL' 82 is to be defined as an anode, a slurry of anode catalyst material 8 is used, which is a mixture of a Pt/Ru/C carrier and a Nafion solution. If the first CEL 81 or the second CEL' 82 is to be defined as a cathode, a slurry of cathode catalyst material 8a is used, which is a mixture of a Pt/C carrier and a Nafion solution.

For obtaining a thickness of the first CEL 81 or the second CEL' 82, the depth for the convex part 751 of the pressing plate 75 to be correspondingly pressed into the hollow 741 of the template 74 is controlled to obtain the thickness of the first CEL 81 or the second CEL' 82.

To sum up, the present invention is a method for fabricating a membrane electrode assembly, where two flat CELs are formed on two surfaces of a PEM separately and a thickness of CEL on the MEA is under control.

The preferred embodiment herein disclosed is not intended to unnecessarily limit the scope of the invention. Therefore, simple modifications or variations belonging to the equivalent of the scope of the claims and the instructions disclosed herein for a patent are all within the scope of the present invention.

## Claims

1. A method of fabricating a membrane electrode assembly, comprising the steps of:
(a) obtaining a membrane electrode assembly chamber (7) having a vacuum facility (71), said vacuum facility having a suction plate (72), a proton exchange membrane (73) being fixed on said suction plate through a vacuum effect, a template (74) being deposed on said proton exchange membrane, said template having a hollow (741);
(b) inputting a slurry of catalyst material into said hollow (741) of said template (74), a binding being processed at a temperature selected from a group consisting of a room temperature and a binding temperature of said slurry of catalyst material and said proton exchange membrane, said binding temperature being obtained by activating a temperature-controllable heater (721) to heat up a temperature of said suction plate (72);
(c) keeping said suction plate (72) at said binding temperature and pressing a pressing plate having a convex part into said hollow (741) of said template (74) at said catalysis temperature to obtain a first catalyst electrode layer (81) on a surface of said proton exchange membrane (73);
(d) after obtaining said first catalyst electrode layer (81) on said surface of said proton exchange membrane (73), cooling down said template (74), taking said template out of said vacuum facility (71), turning over said proton exchange membrane (73), re-activating said vacuum facility (71) to fix said proton exchange membrane (73) on said suction plate (72) through said vacuum effect, and then deposing said template (74) on another surface of said proton exchange membrane;
(e) inputting said slurry of catalyst material into said hollow (741) of said template (74) again, a binding being processed at said binding temperature; and
(f) keeping said suction plate (72) at said binding temperature and pressing said pressing plate having said convex part into said hollow (741) of said template (74) again at said binding temperature to obtain a second catalyst electrode layer (82) on said another surface of said proton exchange membrane (73) and to obtain a membrane electrode assembly having three layers (membrane-electrode-assembly-3-layer) of a catalyst electrode layer (81) plus a proton exchange membrane (73) plus a catalyst electrode layer (82).

2. The method according to claim 1,
wherein said suction plate (72) is a plate made of a sintering material or is selected from a group consisting of a drilled plate, a framed plate, a plate of screens, and any combination of above said plates; and
wherein said plate has a ventilationable surface at a place selected from a group consisting of an upper side and outside.

3. The method according to claim 1 or 2, wherein said slurry of catalyst material is a slurry obtained by mixing a Pt/Ru/C carrier and a Nafion solution.

4. The method according to claim 1 or 2, wherein said slurry of catalyst material is a slurry by mixing a Pt/C carrier and a Nafion solution.

5. The method according to claim 1,
wherein step (b) of inputting a slurry of catalyst material into said hollow (741) of said template (74) includes adding a first gas diffusion layer; and
wherein step (e) of inputting said slurry of catalyst material into said hollow (741) of said template (74) again includes adding a second gas diffusion layer;
thereby obtaining a MEA having five layers, namely a first gas diffusion layer + a first catalyst electrode layer (81) + a proton exchange membrane (73) + a second catalyst electrode layer (82) + a second gas diffusion layer.

6. The method according to claim 5,
wherein said suction plate (72) is a plate made of a sintering material or is selected from a group consisting of a drilled plate, a framed plate, a plate of screens, and any combination of above said plates; and
wherein said plate has a ventilationable surface at a place selected from a group consisting of an upper side and outside.

7. The method according to claim 5 or 6, wherein said slurry of catalyst material is a slurry obtained by mixing a Pt/Ru/C carrier and a Nation solution.

8. The method according to claim 5 or 6, wherein said slurry of catalyst material is a slurry obtained by mixing a Pt/C carrier and a Nafion solution.

9. The method according to one of claims 5 to 8,wherein said gas diffusion layer is made of a ventilative material selected from a group consisting of a conductive-carbon-contained fabric, a nonwoven fabric and a carbon paper.

## Patentansprüche

1. Verfahren zur Herstellung einer Membran-Elektroden-Anordnung, umfassend die folgenden Schritte:
(a) Bereitstellen einer Kammer für eine Membran-Elektroden-Anordnung (7) mit einer Vakuumanlage (71) , wobei die Vakuumanlage eine Saugplatte (72), eine Protonenaustauschmembran (73), die an der Saugplatte durch einen Vakuumeffekt fixiert ist, und eine Schablone (74) aufweist, die an der Protonenaustauschmembran angeordnet ist, wobei die Schablone einen Hohlraum (741) umfasst;
(b) Eingeben einer Suspension eines Katalysatormaterials in den Hohlraum (741) der Schablone (74), wobei ein Binden bei einer Temperatur durchgeführt wird, die aus dem Bereich gewählt wird, der Raumtemperatur und eine Bindetemperatur der Suspension des Katalysatormaterials und der Protonenaustauschmembran umfasst, wobei die Bindetemperatur durch Aktivieren einer temperaturkontrollierbaren Heizvorrichtung erhalten wird, um die Temperatur der Saugplatte (72) zu erhöhen;
(c) Aufrechterhalten der Bindetemperatur an der Saugplatte (72) und Pressen einer Pressplatte, die einen konvexen Teil aufweist, in den Hohlraum (741) der Schablone (74) bei der Katalysetemperatur, um eine erste Katalysatorelektrodenschicht (81) an der Oberfläche der Protonenaustauschmembran (73) zu erhalten;
(d) Kühlen der Schablone (74) nach dem Erhalten der ersten Katalysatorelektrodenschicht (81) an der Oberfläche der Protonenaustauschmembran (73), Entfernen der Schablone aus der Vakuumanlage (71), Umdrehen der Protonenaustauschmembrane (73), Reaktivieren der Vakuumanlage (71), um die Protonenaustauschmembran (73) an der Saugplatte (72) durch den Vakuumeffekt zu fixieren, und Ablegen der Schablone (74) an einer anderen Oberfläche der Protonenaustauschmembran;
(e) erneutes Eingeben der Suspension des Katalysatormaterials in den Hohlraum (741) der Schablone (74), wobei ein Binden bei der Bindetemperatur durchgeführt wird;
(f) Aufrechterhalten der Bindetemperatur an der Saugplatte (72) und erneutes Pressen der Pressplatte, die den konvexen Teil aufweist, in den Hohlraum (741) der Schablone (74) bei der Bindetemperatur, um eine zweite Katalysatorelektrodenschicht (82) auf der anderen Oberfläche der Protonenaustauschmembran (73) zu erhalten, und um eine Membran-Elektroden-Anordnung zu erhalten, die drei Schichten (membrane-electrode-assembly-3-layer) mit einer Katalysatorelektrodenschicht (81) plus einer Protonenaustauschmembran (73) plus einer Katalyseelektrodenschicht (82) aufweist.

2. Verfahren nach Anspruch 1,
**dadurch gekennzeichnet, dass**
die Saugplatte (72) eine Platte ist, die aus einem gesinterten Material hergestellt ist oder aus einer Gruppe ausgewählt ist, die eine gebohrte Platte, eine gerahmte Platte, eine Siebplatte und jede Kombination aus den oben genannten Platten umfasst; und dass die Platte eine belüftbare Oberfläche an einer Position aufweist, die von der Gruppe ausgewählt wird, die eine obere Seite und eine Außenseite umfasst.

3. Verfahren nach Anspruch 1 oder 2,
**dadurch gekennzeichnet, dass**
die Suspension des Katalysatormaterials eine Suspension ist, die durch Mischen eines Pt/Ru/C- Trägermaterials und einer Nafion-Lösung erhalten wird.

4. Verfahren nach Anspruch 1 oder 2,
**dadurch gekennzeichnet, dass**
die Suspension des Katalysatormaterials eine Suspension durch Mischen eines Pt/C-Trägermaterials und einer Nafion-Lösung ist.

5. Verfahren nach Anspruch 1,
**dadurch gekennzeichnet, dass**
der Schritt (b) des Eingebens einer Suspension eines Katalysatormaterials in den Hohlraum (741) der Schablone (74) das Hinzufügen einer ersten Gasdiffusionsschicht umfasst; und
der Schritt (e) des erneuten Eingebens der Suspension des Katalysatormaterials in den Hohlraum (741) der Schablone (74) das Hinzufügen einer zweiten Gasdiffusionsschicht umfasst;
wodurch eine MEA erhalten wird, die fünf Schichten aufweist, nämlich eine erste Gasdiffusionsschicht plus eine erste Katalysatorelektrodenschicht (81) plus eine Protonenaustauschmembran (73) plus eine zweite Katalysatorelektrodenschicht (82) plus eine zweite Gasdiffusionsschicht.

6. Verfahren nach Anspruch 5,
**dadurch gekennzeichnet, dass**
die Saugplatte (72) eine Platte ist, die aus einem gesinterten Material hergestellt ist, oder aus einer Gruppe ausgewählt ist, die eine gebohrte Platte, eine gerahmte Platte, eine Siebplatte und jede Kombination der oben genannten Platten umfasst; und dass die Platte eine belüftbare Oberfläche an einer Position aufweist, die aus der Gruppe, umfassend eine obere Seite und eine Außenseite, ausgewählt wird.

7. Verfahren nach Anspruch 5 oder 6,
**dadurch gekennzeichnet, dass**
die Suspension des Katalysatormaterials eine Suspension ist, die durch Mischen eines Pt/Ru/C-Trägers und einer Nafion-Lösung erhalten wird.

8. Verfahren nach Anspruch 5 oder 6,
**dadurch gekennzeichnet, dass**
die Suspension des Katalysatormaterials eine Suspension ist, die durch Mischen eines Pt/C-Trägers und einer Nafion-Lösung erhalten wird.

9. Verfahren nach einem der Ansprüche 5 bis 8,
**dadurch gekennzeichnet, dass**
die Gasdiffusionsschicht aus einem belüftbaren Material hergestellt ist, das aus einer Gruppe ausgewählt wird, die ein leitendes Kohlenstoff-enthaltendes Gewebe, eine nicht gewebtes Textil und ein Kohlepapier umfasst.

## Revendications

1. Procédé de fabrication d'un ensemble électrode-membrane, comprenant les étapes consistant à :
(a) obtenir une chambre d'ensemble électrode-membrane (7) dotée d'un équipement de vide (71), ledit équipement de vide ayant une plaque d'aspiration (72), une membrane d'échange de protons (73) étant fixée sur ladite plaque d'aspiration par l'intermédiaire d'un effet de vide, un gabarit (74) étant placé sur ladite membrane d'échange de protons, ledit gabarit étant pourvu d'un renfoncement (741) ;
(b) placer une suspension de matériau catalysant dans ledit renfoncement (741) dudit gabarit (74), une liaison étant traitée à une température sélectionnée dans un groupe constitué par une température ambiante et une température de liaison de ladite suspension de matériau catalysant et de ladite membrane d'échange de protons, ladite température de liaison étant obtenue en activant un corps de chauffe (721) thermo-commandable pour augmenter la température de ladite plaque d'aspiration (72) ;
(c) maintenir ladite plaque d'aspiration (72) à ladite température de liaison et presser une plaque de pression ayant une partie convexe dans ledit renfoncement (741) dudit gabarit (74) à ladite température de catalyse pour obtenir une première couche d'électrode catalysante (81) sur une surface de ladite membrane d'échange de protons (73) ;
(d) après obtention de ladite première couche d'électrode catalysante (81) sur ladite surface de ladite membrane d'échange de protons (73), refroidir ledit gabarit (74), sortir ledit gabarit dudit équipement de vide (71), retourner ladite membrane d'échange de protons (73), réactiver ledit équipement de vide (71) pour fixer ladite membrane d'échange de protons (73) sur ladite plaque d'aspiration (72) par l'intermédiaire dudit effet de vide puis placer ledit gabarit (74) sur une autre surface de ladite membrane d'échange de protons ;
(e) replacer ladite suspension de matériau catalysant dans ledit renfoncement (741) dudit gabarit (74), une liaison étant traitée à ladite température de liaison ; et
(f) maintenir ladite plaque d'aspiration (72) à ladite température de liaison et represser ladite plaque de pression pourvue de ladite partie convexe dans ledit renfoncement (741) dudit gabarit (74) à ladite température de liaison pour obtenir une seconde couche d'électrode catalysante (82) sur ladite autre surface de ladite membrane d'échange de protons (73) et pour obtenir un ensemble électrode-membrane ayant trois couches (3 couches d'ensemble membrane-électrode) d'une couche d'électrode catalysante (81) à laquelle viennent s'ajouter une membrane d'échange de protons (73) et une couche d'électrode catalysante (82).

2. Procédé selon la revendication 1,
dans lequel ladite plaque d'aspiration (72) est une plaque fabriquée à partir d'un matériau de frittage ou est sélectionnée dans un groupe constitué par une plaque perforée, une plaque encadrée, une plaque de cribles et toute combinaison desdites plaques susmentionnées ; et
dans lequel ladite plaque a une surface ventilable à un emplacement sélectionné dans un groupe constitué par un côté supérieur et l'extérieur.

3. Procédé selon la revendication 1 ou 2, dans lequel ladite suspension de matériau catalysant est une suspension obtenue en mélangeant un excipient de Pt/Ru/C et une solution de Nafion.

4. Procédé selon la revendication 1 ou 2, dans lequel ladite suspension de matériau catalysant est une suspension obtenue en mélangeant un excipient de Pt/C et une solution de Nafion.

5. Procédé selon la revendication 1,
dans lequel l'étape (b) consistant à placer une suspension de matériau catalysant dans ledit renfoncement (741) dudit gabarit (74) comprend l'ajout d'une première couche de diffusion de gaz ; et
dans lequel l'étape (e) consistant à replacer ladite suspension de matériau catalysant dans ledit renfoncement (741) dudit gabarit (74) comprend l'ajout d'une seconde couche de diffusion de gaz ;
permettant ainsi d'obtenir un MEA doté de cinq couches, notamment une première couche de diffusion de gaz + une première couche d'électrode catalysante (81) + une membrane d'échange de protons (73) + une seconde couche d'électrode catalysante (82) + une seconde couche de diffusion de gaz.

6. Procédé selon la revendication 5,
dans lequel ladite plaque d'aspiration (72) est une plaque fabriquée à partir d'un matériau de frittage ou est sélectionnée dans un groupe constitué par une plaque perforée, une plaque encadrée, une plaque de cribles et toute combinaison desdites plaques susmentionnées ; et
dans lequel ladite plaque a une surface ventilable à en emplacement sélectionné dans un groupe constitué par un côté supérieur et l'extérieur.

7. Procédé selon la revendication 5 ou 6, dans lequel ladite suspension de matériau catalysant est une suspension obtenue en mélangeant un excipient de Pt/Ru/C et une solution de Nafion.

8. Procédé selon la revendication 5 ou 6, dans lequel ladite suspension de matériau catalysant est une suspension obtenue en mélangeant un excipient de Pt/C et une solution de Nafion.

9. Procédé selon l'une quelconque des revendications 5 à 8, dans lequel ladite couche de diffusion de gaz est fabriquée à partir d'un matériau ventilable sélectionné dans un groupe constitué par un tissu contenant du carbone conducteur, un tissu non tissé et du papier de carbone.
